(19) Europäisches Patentamt
European Patent Office
Office européen des brevets

(11) EP 1 543 186 B1

(12) **EUROPEAN PATENT SPECIFICATION**

(45) Date of publication and mention of the grant of the patent:
**24.02.2010 Bulletin 2010/08**

(21) Application number: **03769326.4**

(22) Date of filing: **23.09.2003**

(51) Int Cl.:
***D01F 6/46*** *(2006.01)* ***D04H 1/54*** *(2006.01)*
***C08L 23/10*** *(2006.01)*

(86) International application number:
**PCT/EP2003/010705**

(87) International publication number:
**WO 2004/029341 (08.04.2004 Gazette 2004/15)**

(54) **POLYPROPYLENE FIBRES SUITABLE FOR THERMALLY BONDED NON-WOVEN FABRICS**

POLYPROPYLENFASERN FÜR DIE HERSTELLUNG VON THERMISCH VERFESTIGTEN VLIESSTOFFEN

FIBRES EN POLYPROPYLENE CONVENANT POUR LE LIAGE THERMIQUE DE NON-TISSES

(84) Designated Contracting States:
**DE FR IT**

(30) Priority: **25.09.2002 EP 02021420**
**08.10.2002 US 416988 P**

(43) Date of publication of application:
**22.06.2005 Bulletin 2005/25**

(73) Proprietor: **Basell Poliolefine Italia S.r.l.**
**20124 Milano (IT)**

(72) Inventors:
- **SARTORI, Franco**
**I-44100 Ferrara (IT)**
- **SARTORI, Gabriella**
**I-45030 S. Maria Maddalena (IT)**

(74) Representative: **Giberti, Stefano**
**Basell Poliolefine Italia S.r.l.**
**Intellectual Property**
**P.le Privato G. Donegani 12**
**Casella Postale 19**
**44100 Ferrara (IT)**

(56) References cited:
**EP-A- 0 719 829** **WO-A-00/63471**
**WO-A-96/06210** **WO-A-02/057342**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 543 186 B1

## Description

The present invention relates to thermally bondable fibres comprising propylene polymer compositions, thermally bonded non-woven fabrics obtained from the said fibres and polypropylene compositions for the production of the said fibres.

The definition of "fibres" includes also products similar to fibres, such as fibrils and cut filaments (staple fibres).

Fibres of certain thermoplastic materials are used widely in the manufacturing of thermally bonded products, such as non-woven fabrics, by various processes. Said processes are mainly staple carding/calendering, through air-bonded, spunbonding, melt-blown, and any combination of them for composite structures of non-woven fabrics.

Thermal bonding staple by long and short spinning with carding/calendering as well as spun bond is one of the main technologies applied to produce hygiene non-woven fabrics.

Thermal bonding staple production technology has a number of advantages, such as less investment costs and capability of producing softer/better handling non-woven fabrics with a very homogeneous aspect.

A fundamental requirement of polyolefin fibres for thermally bonded non-woven fabrics is that fibres must bond to each other by means of the joint action of temperature and pressure on which the hot calendering process is based.

A drawback of such technology, which requires a two-stage process (staple production and carding/calendering) with higher variable costs, is the production of non-woven fabrics with lower tenacity in cross direction. Moreover, such technology shows limitations in the minimum non-woven-fabric weight reachable due to the carding constraints. The cross-directional strength of the thermally bonded non-woven fabrics is mainly affected by the high orientation induced on the fibres along machine direction during carding/calendering process.

There is a need to produce thermally bondable fibres that are not so affected by the said drawback and as a result it is found that specified propylene polymers are much superior in the mechanical properties to usual propylene polymers for fibres.

There have already been made various attempts to improve the thermal bondability (i.e. the bond strength) of polyolefin fibres and/or the calendering speed of fibres. For instance, US patent 4,211,819 describes heat-melt adhesive fibres obtained by spinning a crystalline poly(propylene-*co*-ethylene-*co*-1-butene). Such fibres having a lower heat-melting adhesive temperature are only used as binder material, therefore the mechanical properties are conferred by other materials. In fact, when non-woven fabrics are prepared in the examples, the said fibres are mixed with rayon fibres before calendering.

The applicant has now found that due to particular olefin copolymers and olefin copolymer blends fibres having an improved thermal bondability associated with a good balance of mechanical properties can be provided.

In particular, the fibres of the present invention are capable of bonding to each other at lowers temperatures than the known polypropylene fibres.

Another advantage is that the fibres of the present invention show higher tenacity values but without an evident decrease of the values of elongation at break.

A further advantage of the fibres of the present invention is that the said fibres are capable of bonding tenaciously even if the fibres have a relatively low melt flow ratio. In fact, it has been surprisingly found that the fibres of the present invention do not necessarily require the formation of skin-core structures to achieve high levels of bond strength.

The applicant has also found that due to the fibres of the present invention it can be achieved thermally bonded non-woven fabrics having improved physical properties and loftiness in comparison with thermally bonded non-woven fabrics made of propylene homopolymers and copolymers with similar melt flow rate (MFR). In particular, non-woven fabrics of the present invention have improved strength properties, more particularly higher cross-directional tenacity and higher bonding force.

A further advantage is that non-woven fabrics of the present invention are produced at lower thermal bonding temperature maintaining the same calendering speed or at the same calendering temperature with higher calendering speed.

Therefore the present invention provides thermally bondable fibres consisting of a propylene polymer composition having an MFR value from 4 to 50 g/10 min, preferably from 6 to 15 g/10 min, and comprising a polymer component selected from:

i) a crystalline propylene random copolymer or a crystalline propylene polymer composition selected from:

a) a copolymer or polymer composition containing at least 0.8% by weight of ethylene, and optionally one or more $C_4$-$C_{10}$ $\alpha$-olefins, and having a melting temperature of 155° C or higher, a content of fraction soluble in xylene at room temperature lower than 5% by weight, a value of the ratio of the polymer fraction collected at the temperature range from 25° to 95° C by temperature rising elution fractionation (TREF) with xylene to the xylene-soluble fraction, higher than 8; and

b) a copolymer or polymer composition containing more than 2.5 wt% by weight of ethylene and optionally one

or more $C_4$-$C_{10}$ α-olefins and having a melting temperature of 153° C or higher, a content of fraction soluble in xylene at room temperature lower than 10% by weight, preferably lower than 8% by weight, and a value of the ratio of the polymer fraction collected at the temperature range from 25° to 95°C by TREF with xylene to the xylene soluble fraction at room temperature, higher than 4, preferably higher than 4.5; and

ii) a crystalline propylene polymer composition containing at least 0.64 wt% of ethylene and/or $C_4$-$C1_0$ α-olefin recurring unit and comprising (percent by weight):

I) . 20-80%, preferably from 30-70%, of a crystalline propylene homopolymer and/or crystalline propylene random copolymer containing up to 1.5%, preferably up to 0.5%, by weight of ethylene and/or $C_4$-$C_{10}$ α-olefin; and
II) 20-80%, preferably from 30-70%, of a crystalline random copolymer selected from:

IIa) a copolymer of propylene with 0.8 to 10% by weight of ethylene; provided that the difference in the ethylene content between polymer (I) and polymer (IIa) be at least 0.8 percentage unit, preferably 1 percentage unit, more preferably 2 percentage units, with respect to the weight of the (co)polymer concerned;
IIb) a copolymer of propylene with 1.5 to 18% by weight of a $C_4$-$C_{10}$ α-olefin and optionally ethylene; provided that the difference in the comonomer content between polymer (I) and polymer (IIb) be at least 1.5 percentage units, preferably 2 percentage units, with respect to the weight of the (co)polymer concerned; and
IIc) a mixture of copolymer (IIa) and copolymer (IIb).

In the present invention the term "copolymer" means a polymer with two or more different recurring units, such as bipolymer and terpolymer.
The above crystalline polymers exhibit a stereoregularity of the isotactic type.
In the present disclosure room temperature refers to a temperature of about 25° C.
When ethylene is present as the sole comonomer in component (i)(a), the said component approximately contains up to 3 wt% of ethylene.
When ethylene is present as the sole comonomer in component (i)(b), the said component approximately contains up to 5 wt% of ethylene.
When $C_4$-$C_{10}$ α-olefins also are present in component (i), they are generally within 1 and 6% by weight with respect to the weight of the whole component. When ethylene is present as the sole comonomer in random copolymer (IIb), the ethylene content is generally within 1% by weight with respect to the weight of the copolymer.
The MFR values of the two propylene polymers constituting polymer composition (ii) can be similar or different.
Composition (ii) exhibits a melting temperature of 153° C or higher and a content of fraction soluble in xylene at room temperature lower than 10% by weight, preferably lower than 9% by weight
The preferred polymeric components are polymer composition (i)(a) and polymer composition (ii); preferred composition (ii) contains at least 0.64 wt% of ethylene and/or $C_4$-$C_{10}$ α-olefin recurring unit and having the following composition (percent by weighty

I) 20-80%, preferably from 30-70%, of a crystalline propylene homopolymer and/or crystalline propylene random copolymer containing up to 1.5%, preferably up to 0.5%, by weight of ethylene and/or $C_4$-$C_{10}$ α-olefin; and
In 20-80%, preferably from 30-70%, of a crystalline random copolymer selected from:

IIa) a copolymer of propylene with 0.8 to 5% by weight of ethylene; provided that the difference in the ethylene content between polymer (I) and polymer (IIa) be at least 0.8 percentage unit, preferably 1 percentage unit, more preferably 2 percentage units, with respect to the weight of the (co)polymer concerned;
IIb) a copolymer of propylene with 1.5 to 12% by weight of a $C_4$-$C_{10}$ α-olefin and optionally ethylene; provided that the difference in the comonomer content between polymer (I) and polymer (IIb) be at least 1.5 percentage units, preferably 2 percentage units, with respect to the weight of the (co)polymer concerned; and
IIc) a mixture of copolymer (IIa) and copolymer (IIb).

Typically, polymer composition (ii) has a value of melting temperature of 155° C or higher, a content of fraction soluble in xylene at room temperature lower than 5% by weight, preferably lower than 4% by weight, and a value of the ratio of the polymer fraction collected at the temperature range from 25° to 95° C by TREF with xylene to the xylene-soluble fraction higher than 8.
More preferably, polymer (I) is the propylene homopolymer and copolymer (II) is the ethylene-propylene copolymer.
The $C_4$-$C_{10}$ α-olefins that may be present as comonomers in the polymer composition according to the present invention are represented by the formula $CH_2$=CHR, wherein R is an alkyl radical, linear or branched, with 2-8 carbon

atoms or an aryl (in particular phenyl) radical. Examples of said $C_4$-$C_{10}$ α-olefins are 1-butene, 1-pentene, 1-hexene, 4-methyl-1-pentene and 1-octene. Particularly preferred is 1-butene.

Topically, the fibres according to the present invention exhibit a value of tenacity higher than 20 cN/tex, preferably higher than 21 cN/tex, with standard throughput and winding speed during the production of staple fibres by long and short spinning technology.

The elongation at break shown by the fibres of the present invention is typically higher than 150%, preferably at least 220%, with standard throughput and winding speed during the production of staple fibres by long and short spinning technology.

The fibres according to the present invention generally exhibit a value of bonding force at 150° C of at least 300 cN, preferably at least 350 cN. The said bonding force values are achieved even with a fibre having an MFR value as low as 20 g/10 min as obtained from a Leonard spinning line as described in the example. For example, fibres having an MFR vale ranging from 20 to 50 g/10 min can have a bonding force value from 300 to 800 cN.

The fibres produced by long and short spinning technology, according to the present invention exhibit preferably a titre ranging from 1 to 8 dtex, preferably 1.5 to 8 dtex.

Preferably the composition of the present invention has a polydispersity index value from 3 to 7, more preferably from 3 to 5.5..

A further embodiment of the present invention is represented by said crystalline propylene polymer composition (ii) that is suitable to prepare fibres. The said polymer composition exhibits an MFR value from 4 to 50 g/10 min, preferably from 6 to 15 g/10 min, an ethylene and/or $C_4$-$C_{10}$ α-olefin content of at least 0.64 wt% and comprising (percent by weight):

I) 20-80%, preferably from 30-70%, of a crystalline propylene homopolymer or crystalline propylene random copolymer containing up to 1.5%, preferably up to 0.5%, by weight of ethylene and/or $C_4$-$C_{10}$ α-olefin; and
II) 20-80%, preferably from 30-70%, of a crystalline random copolymer of propylene with higher than 5 to 10% of ethylene.

The said composition exhibits a value of melting temperature of 153° C or higher and a content of fraction soluble in xylene at room temperature lower than 10%, preferably lower then 5% by weight, more preferably lower than 4% by weight.

Preferably the composition of the present invention has a polydispersity index value from 3 to 7, more preferably from 3 to 5.5.

The propylene polymer material according to the present invention is produced with conventional processes. For example, the polymer material can be prepared by polymerising the monomers in one or more consecutive or parallel stages.

When the polymer material is a composition, it is preferably a composition prepared by polymerising the monomers in two or more consecutive stages. In such a case, the polymerisation process is carried out in at least two separate subsequent stages, wherein in at least two polymerisation stages the relevant monomers are polymerised to form a first polymer (e.g. polymer I) and in the other stage(s) the relevant monomers are polymerised to form a second polymer (e.g. polymer II), operating in each stage, except the first step, in the presence of the polymer formed and the catalyst used in the preceding stage. The catalyst is added only in the first stage; however its activity is such that it is still active for all the subsequent stages. The order in which the polymers of the compositions are prepared is not critical.

The molecular weight regulator is fed in such amounts as to obtain an value for the composition of from 4 to 50 g/10 min, preferably from 6 to 15 g/10 min. The regulation of the molecular weight is carried out by using known regulators, hydrogen in particular.

The composition with an MFR value in the said range can also be obtained after polymerisation by chemical degradation of the polymer in the presence of peroxide, for example, by using appropriate and well-known techniques.

The whole polymerisation process can be continuous or batch according to known techniques and operating in liquid phase, in the presence or not of inert diluent, or in gas phase, or by mixed liquid-gas techniques.

Reaction time, pressure and temperature relative to the two steps are not critical, however it is best if the temperature is from 20° to 100° C. The pressure can be atmospheric or higher.

Alternatively to the above process, compositions can be prepared by another polymerisation way. It is employed a process for the catalytic polymerisation in the gas-phase carried out in at least two interconnected polymerisation zones, the process comprising feeding one or more monomers to said polymerisation zones in the presence of catalyst under reaction conditions and collecting the polymer product from said polymerisation zones, in which process the growing polymer particles flow upward through one of said polymerisation zones (riser) under fast fluidisation conditions, leave said riser and enter another polymerisation zone (downcomer) through which they flow downward under the action of gravity, leave said downcomer and are reintroduced into the riser, thus establishing a circulation of polymer between the riser and the downcomer, the process being optionally characterised in that:

- means are provided which are capable of totally or partially preventing the gas mixture present in the riser from entering the downcomer, and
- a gas and/or liquid mixture having a composition different from the gas mixture present in the riser is introduced into the downcomer.

Such polymerisation process is illustrated in WO 00/02929.

According to a particularly advantageous embodiment of this process, the introduction into the downcomer of the said gas and/or liquid mixture having a composition different from the gas mixture present in the riser is effective in preventing the latter mixture from entering the downcomer.

The polymerisation is preferably carried out in the presence of stereospecific Ziegler-Natta catalysts. An essential component of said catalysts is a solid catalyst component comprising a titanium compound having at least one titanium-halogen bond, and an electron-donor compound, both supported on a magnesium halide in active form. Another essential component (co-catalyst) is an organoaluminium compound, such as an aluminium alkyl compound. An external donor is optionally added to the organoaluminium compound.

The catalysts generally used in the process of the invention are capable of producing polypropylene with an isotacticity index (determined as fraction insoluble in xylene at 25° C as disclosed hereinbelow) greater than 90%, preferably greater than 95%.

Catalysts having the above mentioned characteristics are well known in the patent literature; particularly advantageous are the catalysts described in US patent 4,399,054 and European patent 45977. Other examples can be found in US patent 4,472,524.

The solid catalyst components used in said catalysts comprise, as electron-donors (internal donors), compounds selected from the group consisting of ethers, ketones, lactones, succinates, compounds containing N, P and/or S atoms, and esters of mono- and dicarboxylic acids.

Particularly suitable electron-donor compounds are non-extractable succinates; particularly preferred are the succinates of formula (I) below

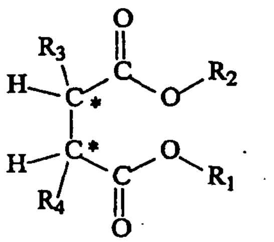

(I)

in which the radicals $R_1$ and $R_2$, equal to, or different from, each other are a $C_1$-$C_{20}$ linear or branched alkyl, alkenyl, cycloalkyl, aryl, arylalkyl or alkylaryl group, optionally containing heteroatoms; and the radicals $R_3$ and $R_4$ equal to, or different from, each other, are $C_1$-$C_{20}$ alkyl, cycloalkyl, aryl, arylalkyl or alkylaryl group, optionally containing heteroatoms with the proviso that at least one of them is a branched alkyl; said compounds being, with respect to the two asymmetric carbon atoms identified in the structure of formula (I), stereoisomers of the type (S,R) or (R,S) that are present in pure forms or in mixtures.

$R_1$ and $R_2$ are preferably $C_1$-$C_8$ alkyl, cycloalkyl, aryl, arylalkyl and alkylaryl groups.

Particularly preferred are the compounds in which $R_1$ and $R_2$ are selected from primary alkyls and in particular branched primary alkyls. Examples of suitable $R_1$ and $R_2$ groups are methyl, ethyl, n-propyl, n-butyl, isobutyl, neopentyl, 2-ethylhexyl. Particularly preferred are ethyl, isobutyl, and neopentyl.

Particularly preferred are the compounds in which the $R_3$ and/or $R_4$ radicals are secondary alkyls like isopropyl, sec-butyl, 2-pentyl, 3-pentyl or cycloakyls like cyclohexyl, cyclopentyl, cyclohexylmethyl.

Examples of the above-mentioned compounds are the (S,R) (S,R) forms pure or in mixture, optionally in racemic form, of diethyl 2,3-bis(trimethylsilyl)succinate, diethyl 2,3-bis(2-ethylbutyl)succinate, diethyl 2,3-dibenzylsuccinate, diethyl 2,3-diisopropylsuccinate, diisobutyl 2,3-diisopropylsuccinate, diethyl 2,3-bis(cyclohexylinethyl)succinate, diethyl 2,3-diisobutylsuccinate, diethyl 2,3-dineopentylsuccinate, diethyl 2,3-dicyclopentylsuccinate, diethyl 2,3-dicyclohexylsuccinate.

Other suitable electron-donor compounds are 1,3-diethers of formula:

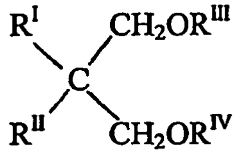

wherein $R^I$ and $R^{II}$ are the same or different and are $C_1$-$C_{18}$ alkyl, $C_3$-$C_{18}$ cycloalkyl or $C_7$-$C_{18}$ aryl radicals; $R^{III}$ and $R^{IV}$ are the same or different and are $C_1$-$C_4$ alkyl radicals; or are the 1,3-diethers in which the carbon atom in position 2 belongs to a cyclic or polycyclic structure made up of 5, 6, or 7 carbon atoms, or of 5-n or 6-n' carbon atoms, and respectively n nitrogen atoms and n' heteroatoms selected from the group consisting of N, O, S and Si, where n is 1 or 2 and n' is 1, 2, or 3, said structure containing two or three unsaturations (cyclopolyenic structure), and optionally being condensed with other cyclic structures, or substituted with one or more substituents selected from the group consisting of linear or branched alkyl radicals; cycloalkyl, aryl, aralkyl, alkaryl radicals and halogens, or being condensed with other cyclic structures and substituted with one or more of the above mentioned substituents that can also be bonded to the condensed cyclic structures; one or more of the above mentioned alkyl, cycloalkyl, aryl, aralkyl, or alkaryl radicals and the condensed cyclic structures optionally containing one or more heteroatoms as substitutes for carbon or hydrogen atoms, or both.

Ethers of this type are described in published European patent applications 361493 and 728769.

Representative examples of said dieters are 2-methyl-2-isopropyl-1,3-dimethoxypropane, 2,2-diisobutyl-1,3-dimethoxypropane, 2-isopropyl-2-cyclopentyl-1,3-dimethoxypropane, 2-isopropyl-2-isoamyl-1,3-dimethoxypropane, 9,9-bis (methoxymethyl) fluorene.

Other suitable electron-donor compounds are phthalic acid esters, such as diisobutyl, dioctyl; diphenyl and benzylbutyl phthalate.

The preparation of the above mentioned catalyst components is carried out according to various methods.

For example, an $MgCl_2 \cdot nROH$ adduct (in particular in the form of spheroidal articles) wherein n is generally from 1 to 3 and ROH is ethanol, butanol or isobutanol, is reacted with an excess of $TiCl_4$ containing the electron-donor compound. The reaction temperature is generally from 80 to 120° C. The solid is then isolated and reacted once more with $TiCl_4$, in the presence or absence of the electron-donor compound, after which it is separated and washed with aliquots of a hydrocarbon until all chlorine ions have disappeared.

In the solid catalyst component the titanium compound, expressed as Ti, is generally present in an amount from 0.5 to 10% by weight. The quantity of electron-donor compound which remains fixed on the solid catalyst component generally is 5 to 20% by moles with respect to the magnesium dihalide.

The titanium compounds which can be used for the preparation of the solid catalyst component are the halides and the halogen alcoholates of titanium. Titanium tetrachloride is the preferred compound.

The reactions described above result in the formation of a magnesium halide in active form. Other reactions are known in the literature, which cause the formation of magnesium halide in active form starting from magnesium compounds other than halides, such as magnesium carboxylates.

The active form of magnesium halide in the solid catalyst component can be recognized by the fact that in the X-ray spectrum of the catalyst component the maximum intensity reflection appearing in the spectrum of the nonactivated magnesium halide (having a surface area smaller than 3 $m^2/g$) is no longer present, but in its place there is a halo with the maximum intensity shifted with respect to the position of the maximum intensity reflection of the nonactivated magnesium dihalide, or by the fact that the maximum intensity reflection shows a width at half-peak at least 30% greater than the one of the maximum intensity reflection which appears in the spectrum of the nonactivated magnesium halide. The most active forms are those where the above mentioned halo appears in the X-ray spectrum of the solid catalyst component

Among magnesium halides, the magnesium chloride is preferred. In the case of the most active forms of magnesium chloride, the X-ray spectrum of the solid catalyst component shows a halo instead of the reflection which in the spectrum of the nonactivated chloride appears at 2.56 Å.

The Al-alkyl compounds used as co-catalysts comprise the Al-trialkyls, such as Al-triethyl, Al-triisobutyl, Al-tri-n-butyl, and linear or cyclic Al-alkyl compounds containing two or more Al atoms bonded to each other by way of O or N atoms, or $SO_4$ or $SO_3$ groups.

The Al-alkyl compound is generally used in such a quantity that the Al/Ti ratio be from 1 to 1000.

The electron-donor compounds that can be used as external donors include aromatic acid esters such as alkyl benzoates, and in particular silicon compounds containing at least one Si-OR bond, where R is a hydrocarbon radical.

Examples of silicon compounds are (tert-butyl)$_2$Si($OCH_3$)$_2$, (cyclohexyl)(methyl) Si($OCH_3$)$_2$, (phenyl)$_2$Si($OCH_{3h}$ and (cyclopentyl)$_2$Si($OCH_3$)$_2$.

Also 1,3-diethers having the formulae described above can also be used advantageously. If the internal donor

is one of these dieters, the external donors can be omitted.

In particular, even if many other combinations of the previously said catalyst components may allow to obtain polymers and polymer compositions having the previously said features 1) and 2), the random copolymers are preferably prepared by using catalysts containing a phthalate as inside donor and $(cyclopentyl)_2Si(OCH_3)_2$ as external donor, or the said 1,3-diethers as inside donors and $(cyclopentyl)_2Si(OCH_3)_2$ as external donor.

Prior to the polymerisation process, the catalysts can be precontacted with small quantities of olefins (prepolymerisation), thus improving both the performance of the catalysts and the morphology of the polymers. Prepolymerisation is carried out maintaining the catalysts in suspension in a hydrocarbon solvent (hexane or heptane, for example) and polymerising at a temperature from ambient to 60° C for a time sufficient to produce quantities of polymer from 0.5 to 3 times the weight of the solid catalyst component. It can also be carried out in liquid propylene, at the temperature conditions indicated above, producing quantities of polymer that can reach up to 1000 g per gram of catalyst component.

The fibres of the present invention can contain formulations of stabilizers suited for obtaining a skin-core structure (skin-core stabilization) typical for thermal bonding staple fiber (i.e. for hygiene applications), or a highly stabilizing formulation, typical for staple fiber (i.e. geotextile applications). In the latter case, a superior resistance to aging is achieved, for durable non-wovens.

Preferred examples of skin-core stabilizations are those comprising one or more of the following stabilizers (percent by weight with respect to the total weight of polymer and stabilizers):

a) from 0.01% to 0.5% of one or more organic phosphites and/or phosphonites;
b) from 0.005% to 0.5% of one or more HALS (Hindered Amine Light Stabilizer);

and optionally one or more phenolic antioxidants in amounts not higher than 0.02%.

Specific examples of phosphites are:

tris(2,4-di-tert-butylphenyl)phosphite marketed by Ciba® Speciality Chemicals under the trademark Irgafos® 168; distearyl pentaerythritol diphosphite marketed by BORG-WARNER CHEMICAL under the trademark Weston® 618; 4,4'-butylidene bis(3-methyl-6-tert-butylphenyl-di-tridecyl)phosphite marketed by ADEKA ARGUS CHEMICAL under the trademark Mark P®; tris(monononyl phenyl)phosphite; bis(2,4-di-tert-butyl)pentaerithrytol diphosphite, marketed by BORG-WARNER CHEMICAL under the trademark LJltranox® 626.

A preferred example of phosphonites is the tetrakis (2,4-di-tert-butylphenyl) 4,4'-diphenylilenediphosphonite, on which Sandostab® P-EP.Q, marketed by Sandoz, is based.

The HALS are monomeric or oligomeric compounds containing in the molecule one or more substituted amine, preferably piperidine, groups.

Specific examples of HALS containing substituted piperidine groups are poly{[6-(1,1,3,3-tetramethylbutyl)-imine]-1,3,5-triazine-2,4-diol][2-(2,2,6,6-tetramethylpiperidyl)amine] hexamethylene-[4-(2,2,6,6 tetramethylpiperidyl)imine) under the trademark Chimassorb® 944, poly(N- beta -hydroxymethyl-2,2,6,6-tetramethyl-4-hydroxy-piperidyl succinate) under the trademark Tinuvin® 622, bis(2,2,6,6-tetramethyl-4-piperidyl)sebacate under the trademark Tinuvin® 770, poly[hexamethylenedi(4-amino-2,2,6,6-tetramethyl)piperidine] under the trademark Spinuvex® A-36, all marketed by Ciba® Speciality Chemicals, bis(1,2,2,6,6,-pentemethyl-4-piperidyl) sebacate under the trademark Tinuvin® 292 and bis(1,2,2,6,6-pentamethyl-4-piperidinyl 2-n-butyl(3,5-di- tert butyl-4-hydroxybenzyl)malonate under the trademark Tinuvin® 144.

Another compound is 1,6-hexanediamine, N,N'-bis(2,2,6,6-tetramethyl)-4-piperidinyl)-, polymer with 2,4-dichloro-6-84-morpholinyl)-1,3,5-triazine marketed by American CYANAMID under the trademark. Cyasorb® UV 3346.

Examples of phenolic antioxidants are: tris (4-tert-butyl-3-hydroxy-2,6-dimethylbenzyl)-s-triazine-2-4-6-(1H, 3H, 5H)-trione, marketed by American CYANAMID under the trademark Cyanox® 1790; calcium bi [monoethyl (3,5-di-tert-butyl-4-hydroxy-benzyl) phosphonate]; 1,3,5-tris (3,5-di-tert-butyl-4-hydroxybenzyl)-s-triazine-2,4,6 (1H, 3H, 5H) trione; 1,3,5-trimethyl-2,4,6-tris (3,5-di-tert-butyl-4-hydroxybenzyl) benzene; pentaerythrityl-tetrakis [3-(3,5-di-tert-butyl-4-hydroxyphenyl) propionate]; octadecyl 3-(3,5-di-tert-butyl-4-hydroxyphenyl)-propionate, marketed by Ciba® Speciality Chemicals under the trademarks Irganox® 1425; Irganox® 3114; Irganox® 1330; Irganox® 1010; Irganox® 1076 respectively; 2,6-dimethyl-3-hydroxy-4-tert-butyl benzyl abietate.

Illustrative examples of skin-core stabilizations are given in EP-A-391 438.

Preferred examples of highly stabilizing formulations are those containing more than 0.02%, in particular from 0.04 to 0.2% by weight (with respect to the total weight of polymer and stabilizers) of one or more antioxidants, like, for example, phenolic antioxidants.

Another suitable stabilizing formulation comprises a lactone of the furane-2-type, a phenol, a HALS and an organic phophite and/or phosphonite. Such a formulation is disclosed in European patent application No. 3013881.2, for example.

The above stabilizers can be added to the polymer by means of pelletization or surface coating, or they can be mechanically mixed with the polymer.

Moreover, the fibres of the present invention can contain other additives commonly employed in the art, like anti-slip agents, antistatic agents, flame retardants, fillers, nucleating agents, pigments, anti-soiling agents, photosensitizers.

The fibres of the present invention can be prepared by way of any known melt spin process.

In particular, they can be prepared in form of staple fibres, by using both long-spinning and short-spinning apparatuses.

The long-spinning apparatuses normally comprise a first spinning section where the fibres are extruded and air-cooled in a quenching column at a relatively high spinning speed.

Subsequently, these fibres go to the finishing step, during which they are drawn, crimped-bulked and cut. Generally, the above mentioned finishing step is carried out separately with respect to the spinning, in a specific section where the fibre rovings are gathered into one single big roving. Said big roving is then sent to drawing, crimping-bulking and cutting apparatuses which operate at a speed ranging from 100 to 200 m/min.

In other types of long-spinning apparatuses the above mentioned finishing steps are carried out in sequence with the spinning step. In this case the fibres go directly from the gathering to the drawing rollers, where they are drawn.

The process conditions generally adopted when using the long-spinning apparatuses are the following:

- output per hole: greater than 0.1 g/min, preferably from 0.15 to 1 g/min, more preferably from 0.2 to 0.5 g/min;
- take up speed: equal to or higher than 500m/min, preferably from 500 to 3500 m/min, more preferably from 600 to 2000 m/min;
- space where the fibres cool off and solidify after exiting the die: greater than 0.50 m.

Moreover, it is preferable that the draw ratio be from 1.1 to 4.

For further details on the long-spinning apparatuses reference is made to Friedelm Hauser "Plastics Extrusion Technology", Hauser Publishers, 1988, chapter 17.

The short-spinning apparatuses allow for a continuous operation, since the spinning speed is compatible with the drawing, crimping and cutting speeds.

The process conditions which are best suited to be used according to the present invention using short-spinning apparatuses are the following. The output per hole ranges from 0.005 to 0.18 g/min, preferably from 0.008 to 0.07 g/min, more preferably from 0.01 to 0.03 g/min. The take up speed ranges from 30 to 300 m/min, preferably from 100 to 300 m/min. The draw ratios range from 1.1 to 3.5, preferably from 1.2 to 2.5. Moreover, the fibre cooling and solidification space at the output of the die (cooling space) is preferably greater than 2 mm, more preferably greater than 10 mm, in particular from 10 to 350 mm. Said cooling is generally induced by an air jet or flow.

For further details on the short-spinning apparatuses reference is made to M. Ahmed, "Polypropylene fibres science and technology", Elsevier Scientific Publishing Company (1982) pages 344-346.

The spinning temperature for the above long-spinning and short-spinning apparatuses generally ranges from 220° to 340° C, preferably from 250° to 300° C. In particular, the extruding temperature can range from 260° to 275° C. without negatively affecting the capability of the fibre to bond each other.

After the production of the staple in a first step, there is the formation of a fibre web by passing the staple fibres through a carding machine, and by thermal bonding by calendering (calender rolls are employed). The staple fibres can also be thermally bonded by the through air bonding process, where a hot air flow is used to achieve the thermal bonding.

Independently from the specific thermal bonding method employed, the bonding temperatures are preferably within the range from 120° to 160° C, more preferably from 130° to 145° C.

A further embodiment of the present invention relates to thermally bonded articles, in particular non-woven fabrics, produced with the fibres according to the present invention.

The said thermally bonded articles can also be obtained from compositions of the fibres of the present invention with conventional polyolefin fibres, in particular made of propylene homopolymers.

Another embodiment of the present invention relates to a composite non-woven fabric. The fabric is made from two or more layers wherein at least one layer is made of the above-mentioned thermally bonded non-woven fabric. The other layer(s) may be non-woven fabric(s) as well that is/are made of other kind of polymers or polymer compositions.

Thanks to the use of the fibres of the present invention, an improved adhesion among the layers is obtained.

Other thermally bonded composite articles falling in the definition of the present invention are those comprising a non-woven fabric coupled with a polyolefin film, wherein the non-woven fabric is made of or comprises the fibres of the present invention; while the polyolefin film may be made of or comprise the following polyolefins: a random copolymer A of propylene with one or more comonomers selected from $\alpha$-olefins of formula $CH_2$=CHR, wherein R is a $C_2$-$C_8$ alkyl radical, preferably a $C_2$-$C_6$ alkyl radical, and/or a polyolefin B that is selected from polymers or copolymers, and their mixtures, of $CH_2$=CHR olefins where R is a, hydrogen atom or a $C_1$-$C_8$ alkyl radical. Another suitable polymer for the

film layer is polyethylene.

The non-woven fabrics of the present invention are particularly useful for hygienic garments, medical drapes, towels, wipers. Typical examples of said composite articles are nappy and other disposable articles.

The coupling between the film and the non-woven fabric can be obtained for instance by heat treatment in a calender or by using adhesives, like hot melts.

The following examples are given to illustrate and not to limit the present invention.

The data relating to the polymeric materials and the fibres shown in the description and the examples are determined by way of the methods reported below.

- MFR: ISO method 1133 (230° C and 2.16 kg);
- Melting and crystallisation temperature: by DSC with a temperature variation of 20° C per minute;
- Ethylene content: by IR spectroscopy;
- Polydispersity Index (PI): measurement of molecular weight distribution of the polymer. To determine the PI value, the modulus separation at low modulus value, e.g. 500 Pa, is determined at a temperature of 200° C by using a RMS-800 parallel plates rheometer model marketed by Rheometrics (USA), operating at an oscillation frequency which increases from 0.01 rad/second to 100 rad/second. From the modulus separation value, the PI can be derived using the following equation:

$$PI = 54.6 \times (\text{modulus separation})^{-1.76}$$

wherein the modulus separation (MS) is defined as:

$$MS = (\text{frequency at } G' = 500 \text{ Pa})/(\text{frequency at } G'' = 500 \text{ Pa})$$

wherein G' is the storage modulus and G" is the low modulus.
- Fractions soluble and insoluble in xylene at 25° C: 2.5 g of polymer are dissolved in 250 ml of xylene at 135° C under agitation. After 20 minutes the solution is allowed to cool to 25° C, still under agitation, and then allowed to settle for 30 minutes. The precipitate is filtered with filter paper, the solution evaporated in nitrogen flow, and the residue dried under vacuum at 80° C until constant weight is reached. Thus one calculates the percent by weight of polymer soluble and insoluble at room temperature (25° C).
- Temperature rising elution fractionation with xylene (TREF): About 1 g of sample is dissolved in 200 mL of o-xylene, stabilized with 0.1 g/L of Irganox® 1010 (pentaerytrityl tetrakis 3-(3,5-di-tert-butyl-4-hydroxyphenyl)propanoate). The dissolution temperature is in the range of 125-135° C. The resulting solution is poured off into a column packed with glass beads and subsequently cooled down slowly in 16.5 h to 25° C.

  The first fraction is obtained at room temperature eluting with o-xylene. The second fraction is collected after having raised the column temperature up to 95° C. The polymer component soluble between 25° and 95 °C is collected as a single fraction.

  The successive fractions are eluted with o-xylene while the temperature is raised linearly between 95° to 125° C. Each fraction, recovered as a 200 mL solution, is collected at 1° ° C temperature increments. The polymer fractions are subsequently precipitated with acetone, filtered on a 0.5 μm PTFE filter, dried under vacuum at 70° C and weighted.
- Titre of fibres: from a 10 cm long roving, 50 fibres are randomly chosen and weighed. The total weight of the said 50 fibres, expressed in mg, is multiplied by 2, thereby obtaining the titre in dtex.
- Tenacity and Elongation (at break) of fibres: from a 500 m roving a 100 mm long segment is cut. From this segment the single fibres to be tested are randomly chosen.

  Each single fibre to be tested is fixed to the clamps of an Instron dinamometer (model 1122) and tensioned to break with a traction speed of 20 mm/min for elongations lower than 100% and 50 mm/min for elongations greater than 100%, the initial distance between the clamps being of 20 mm. The ultimate strength (load at break) and the elongation at break are determined.

  The Tenacity is derived using the following equation:

$$\text{Tenacity} = \text{Ultimate strength (cN)} \times 10/\text{titre (dtex)}$$

- Bonding force of fibres: specimens are prepared from a 400 tex roving (method ASTM D 1577-7) 0.4 meter long, made up of continuous fibres. After the roving has been twisted eighty times, the two extremities are united, thus obtaining a product where the two halves of the roving are entwined as in a rope. The thermal bonding is carried out one said specimen using a Bruggel HSC-ETK thermal bonding machine, operating at various plate temperatures (see in the tables) using a clamping pressure of 0.28 MPa and 1 second bonding time. The previously said dynamometer, operated at a traction speed of 2 cm/min, is used to measure the average force required to separate the two halves of the roving which constitute each specimen at the thermal bonding point. The obtained graph shows the force varying from minimum to maximum values (peaks are obtained). The value resulting from averaging out all the minimum and maximum values shown in the graph represents the said average force. The result, expressed in cN, is obtained by averaging out at least eight measurements, and represents the bond strength of the fibres. When non-woven samples are prepared, the bond strength is determined on specimens 20 cm long and 5 cm wide. The 5 cm wide extremities are fixed to the clamps of the dynamometer and tensioned at a clamp speed of 100 mm/min (the initial distance between the clamps being of 10 cm). The maximum force measured in the machine direction (MD) and in the cross direction (CD), with respect to the calendering step, represents the strength of the fibres.

- Thermal Bonding Index: calculated as $\sqrt{(TenCD \times TenMD)} \times 20/X,$ where 20 is the reference weight and X is the weight of the non-woven fabric.

Examples 1 and 2

The polymers are prepared by polymerising propylene and ethylene in the presence of a high yield, highly stereospecifc Ziegler-Natta catalyst. The catalyst employed comprises a catalyst component prepared by analogy with example 5 of EP 728 769 but using microspheroidal $MgCl_2 \cdot 1.7\ C_2H_5OH$ instead of $MgCl_2 \cdot 2.1\ C_2H_5OH$.

Such catalyst component is used with triethylaluminium and dicyclopentyldimethoxysilane as external donor. The weight ratio $AlEt_3$/external donor is 30. Other operative conditions and the characteristics of the produced polymers are indicated in Table 1.

The polymers are prepared by polymerising propylene in a first reactor and propylene and ethylene in a second reactor under continuous conditions in a plant comprising a gas phase polymerisation apparatus.

The resulting properties of the polymer compositions are reported in Table 2.

Table 1

| Example | 1 | | 2 | |
|---|---|---|---|---|
| $AlEt_3$, g/h | 90 | | 90 | |
| $AlEt_3$/solid cat. component, g/g | 18 | | 20 | |
| Bulk polymerisation | 1st component | 2nd component | 1st component | 2nd component |
| Temperature, ° C | 72 | 72 | 72 | 70 |
| Split, wt% | 58 | 42 | 60 | 40 |
| Ethylene content, wt% | 0 | 3.57 | 0 | 3.75 |
| 1st component = polymer produced in first polymerisation stage; 2nd component = polymer produced in second polymerisation stage; Split = amount of polymer produced; wit% = % by weight. | | | | |

Comparative example 1 (1c)

Example 1 is repeated except that cyclohexylmethyldimethoxysilane is used as external donor and the polymerisation in the second step is carried out in the same conditions of the first reactor resulting in a homopolymer.

The resulting properties of the polymer are reported in Table 2.

Table 2

| Example | 1 | 2 | 1c |
|---|---|---|---|
| MFR, g/ 10 min | 12.8 | 10.8 | 12 |

(continued)

| Example | 1 | 2 | 1c |
|---|---|---|---|
| Ethylene content, wt% | 1.5 | 1.5 | 0 |
| Xylene-insoluble fraction, wt % | 97 | 96.8 | 95.3 |
| Polymer fraction eluted between 25-95° C, wt% | 28.2 | 28.2 | 11.7 |
| TREF 25-95° C/xylene soluble ratio | 9.4 | 8.8 | 2.5 |
| Polydispersity Index | 3.3 | 3.5 | 3.8 |
| Melting temperature, °C | 158.5 | 157.9 | 164.4 |

Examples 3-6

The compositions obtained in examples 1 and 2 are spun in a Leonard 25 spinning pilot line having length/diameter ratio of the screw of 25, screw diameter of 25 mm and compression ratio of 1:3. The line is marketed by Costruzioni Meccaniche Leonard-Sumirago (VA).

All spinning tests are made on stabilized, pelletized polymers with two different conventional additive packages formulations.

Spinning tests are carried out with the following conditions: hole diameter of 0.4 mm, output of 0.4 g/minxhole and mechanical values are measured at 1500 m/min winding speed with stretching ratio 1:1.5..

In Table 3 the properties of the fibres thus obtained are reported.

Comparative example 2 (2c)

Example 3 is repeated except that the polymer obtained in comparative example 1 is used in the place of the one of example 1.

The data in Table 3 show that with respect to the comparative ones, the fibres according to the present invention have increased values of the tenacity and particularly increased bonding force also at lower temperature.

Table 3

| Example | 3 | 4 | 5 | 6 | 2c |
|---|---|---|---|---|---|
| Composition of example | 1 | 1 | 2 | 2 | 1c |
| Extrusion temperature, °C | 280 | 280 | 280 | 280 | 280 |
| Fibre MFR, g/10 min | 70 | 71 | 84 | 70 | 80-90 |
| Fibre titre, dtex | 1.90 | 2.0 | 1.95 | 2.0 | 2.0 |
| Tenacity, cN/tex | 22.2 | 20.6 | 21.9 | 25.4 | 20.0 |
| Elongation at break, % | 265 | 220 | 275 | 235 | 285 |
| Bonding force at 150° C, cN | 635 | 570 | 580 | 645 | 480 |
| Bonding force at 145° C, cN | 385 | 400 | 360 | 420 | bonding not achieved |

Examples 7 and 8 and comparative example 3 (3c)

The compositions of example 2 and comparative example 1 are spun in a Leonard 25 spinning pilot line having length/diameter ratio of the screw of 5 and marketed by Costruzioni Meccaniche Leonard-Sumirago (VA).

The spinning conditions are the same as the ones of example 3 except for lower extrusion temperatures as reported in Table 4.

In Table 4 the operative conditions and the properties of the fibres thus obtained are reported.

Table 4

| Example | 7 | 8 | 3c |
|---|---|---|---|
| Extrusion temperature, °C | 270 | 265 | 265 |

(continued)

| Example | 7 | 8 | 3c |
|---|---|---|---|
| MFR of the fibres, g/10 min | 45 | 25 | 22 |
| Titre, dtex | 2.0 | 2.0 | 2.0 |
| Tenacity, cN/tex | 23.9 | 24.7 | 20.3 |
| Elongation at break, % | 275 | 275 | 285 |
| Bonding force at 150° C, cN | 780 | 370 | 200 |

Table 4 shows that with respect to the comparative ones, the fibres according to the present invention maintain a good bonding force value even at lower fibre MFR achieved at lower extrusion temperature whilst the reference fibres have much lower bonding force.

The compositions of the present invention allow to obtain high bonding force values with low polymer degradation maintaining good balance tenacity/elongation of the fibre in a wide range of extrusion temperature (265° - 280° C).

Example 9 and comparative example 4 (4c)

Staple fibres are prepared as in example 6 and in comparative example 2 excepted that the extrusion temperature is of about 300° C, the output is of 0.345 g/minxhole, winding speed is 1500 m/min and stretching ratio is 1:1.3.

Then the staple fibres are subjected to carding and calendering process for the preparation of a non-woven fabric. The main conditions used in the carding/calendering step are below summarised in Table 5.

Table 5

| | |
|---|---|
| Carding speed, m/min | 120 |
| Embossed calendering roll temperature, ° C | 150 |
| Smooth calendering roll temperature, ° C | 139 |

In Table 6 same data relating to the staple fibres and the non-woven fabric thus produced are reported. The Edana Standard Method is used to test the properties of the non-woven fabric.

Table 6

| Example | 4c | 9 |
|---|---|---|
| Features of the fibre | | |
| Average filament titre, dtex | 2.10 | 2.16 |
| MFR, g/10 min | 45 | 38 |
| Features of the non-woven fabric | | |
| Weight, g/m$^2$ | 20 | 20 |
| CD Tenacity, N/5cm | 8.7 | 12 |
| MD Tenacity, N/5cm | 38.0 | 37.0 |
| CD Elongation at break, % | 45 | 42 |
| MD Elongation at break, % | 38 | 35 |
| Thermal Bonding Index, N/5cm | 18.2 | 21.1 |

The data in Table 6 show that the non-woven fabric according to the present invention has a 38% increase of cross directional tenacity in comparison with the comparative non-woven fabric and also good processability.

Example 10

Example 1 has repeated except that a different polymerisation apparatus and conditions are used.

The gas phase polymerisation apparatus comprises two interconnected cylindrical reactors, downcomer 1 and riser 2. Fast fluidisation conditions are established in reactor 1 by recycling gas from the gas-solid separator. The way to differentiate the gas composition in the two reactor legs is the "barrier" feed. This stream is propylene fed in the larger upper part of the downcomer.

The polymerisation conditions and resulting properties of the polymer as polymerised are reported in Table 7.

Table 7

| Example | 10 |
|---|---|
| TEAL/Donor, wt./wt | 3 |
| $C_2^-/(C_2^-+C_3^-)$ (riser), mol/mol | 0.0428 |
| Temperature, °C | 75 |
| Pressure, bar | 28 |
| Properties of the polymer composition | |
| MFR, dg/min | 1.3 |
| Ethylene content, wt% | 4.2 |
| Xylene-insoluble fraction, wt % | 91.3 |
| Polymer fraction eluted between 25-95° C, wt% | 43.1 |
| TREF 25-95° C/xylene soluble ratio | 4.95 |
| Polydispersity Index | 3.8 |
| Melting Temperature, ° C | 154 |
| Melting enthalpy, J/g | 88 |
| Crystallisation temperature, C | 99 |
| Notes: $C2^-$= ethylene; $C_3^-$ = propylene; $C_2^-/(C_2^-+C_3^-$ = monomer feed ratio. | |

The polymer obtained in example 10 is subjected to extrusion/granulation in a twin screw extruder (L/D= 35) in the presence of 0.028% by weight of calcium stearate, 0.018 wt % of Irganox® 3114 and 0.035% by weight of peroxide. The operative conditions are as follows: head temperature of 250° C, melt temperature of 239° C and output of 21 kg/hour. The resulting properties of the polymer obtained by this extrusion are reported in Table 8.

Table 8

| Example | 11 |
|---|---|
| MFR, dg/min | 11.8 |
| Ethylene content, wt% | 4.2 |
| Xylene-soluble fraction, wt % | 8.7 |
| Xylene-insoluble fraction, wt % | 91.3 |
| Polymer fraction eluted between 25-95° C, wt% | 45.6 |
| TREF 25-95° C/xylene soluble ratio | 4.96 |
| Polydispersity Index | 2.7 |
| Melting Temperature, °C | 154 |

Example 11

The polymer composition of example 10 is then spun in a Leonard 25 spinning pilot line having length/diameter ratio of the screw of 25, screw diameter of 25 mm and compression ratio of 1:3. The line is marketed by Costruzioni Meccaniche Leonard-Sumirago (VA): Spinning tests are carried out with the following conditions: hole diameter of 0.4 mm, output of 0.4 g/min×hole. The mechanical values are measured on filaments produced at 1500 m/min winding speed with stretching ratio 1:1.5, spinneret with 61 holes. The spinning is stable with no inconvenience.

Comparative Example 5 (5c)

Example 11 is repeated except that the polymer used is a commercial resin made up of a propylene homopolymer having an MFR value of 12 g/10 min, polydispersity index of 3.8, a melting temperature of 162° C and an amount of xylene-soluble fraction of 3.5 g/ml.

In Table 9 the properties of the fibres thus obtained are reported in comparison with the properties of the fibres obtained in comparative example 5.

Table 9

| Example | 12 | 5c |
|---|---|---|
| Extrusion temperature, C | 280 | 280 |
| MFR of the fibres, g/10 min | 72.1 | 94 |
| Titre, dtex | 1.80 | 1.8 |
| Tenacity, cN/tex | 42.7 | 19.4 |
| Elongation at break, % | 100 | 225 |
| Bonding force at 150° C, cN | 590 | 415 |
| Retraction, % | 26.1 | 5.2 |

It is worth noting the high tenacity of the staple fibre obtained with a still good bonding force of the example 10 in comparison with the said commercial product. Retraction also results much higher.

## Claims

1. A fibre for thermal bonding comprising a propylene polymer composition having an MFR value from 4 to 50 g/10 min, and being selected from:

   i) a crystalline propylene random copolymer or a crystalline propylene polymer composition selected from:

      a) a copolymer or polymer composition containing at least 0.8% by weight of ethylene and optionally one or more $C_4$-$C_{10}$ $\alpha$-olefins and having a melting temperature of 155°C or higher, a content of fraction soluble in xylene at room temperature lower than 5% by weight, a value of the ratio of the polymer fraction collected at the temperature range from 23°o 95°C by temperature rising elution fractionation (TREF) with xylene to the xylene soluble fraction, higher than 8; and
      b) a copolymer or polymer composition containing more than 2.5 wt% by weight of ethylene and optionally one or more $C_4$-$C_{10}$ $\alpha$-olefins and having a melting temperature of 153°C or higher, a content of fraction soluble in xylene at room temperature lower than 10% by weight and a value of the ratio of the polymer fraction collected at the temperature range from 25°to 95°C by TREF with xylene to the xylene soluble fraction at room temperature, higher than 4; and

   ii) a crystalline propylene polymer composition having a melting temperature of 153°C or higher, a content of fraction soluble in xylene at room temperature lower than 10% by weight; the said composition containing at least 0.64 wt% of ethylene and/or $C_4$-$C_{10}$ $\alpha$-olefin recurring unit and comprising (percent by weight):

      1) 20-80% of a crystalline propylene homopolymer and/or crystalline propylene random copolymer containing up to 1.5% by weight of ethylene and/or $C_4$-$C_{10}$ $\alpha$-olefin; and

II) 20-80% of a crystalline random copolymer selected from:

IIa) a copolymer of propylene with 0.8 to 10% by weight of ethylene; provided that the difference in the ethylene content between polymer (I) and polymer (IIa) be at least 0.8 percentage unit with respect to the weight of the (co)polymer concerned; and
IIb) a copolymer of propylene with 1.5 to 18% by weight of a $C_4$-$C_{10}$ $\alpha$-olefin and optionally ethylene; provided that the difference in the comonomer content between polymer (I) and polymer (IIb) be at least 1.5 percentage units with respect to the weight of the (co) polymer concerned; and
IIc) a mixture of copolymer (IIa) and copolymer (IIb).

**2.** The fibre of claim 1 wherein polymer composition (ii) has a melting temperature of 155°C or higher, a content of fraction soluble in xylene at room temperature lower than 5% by weight and a value of the ratio of the polymer fraction collected at the temperature range from 25°to 95°C by TREF with xylene to the xylene soluble fraction higher than 8; the said composition containing at least 0.64 wt% of ethylene and/or $C_4$-$C_{10}$ $\alpha$-olefin recurring unit and comprising (percent by weight):

I) 20-80% of a crystalline propylene homopolymer and/or crystalline propylene random copolymer containing up to 1.5% by weight of ethylene and/or $C_4$-$C_{10}$ $\alpha$-olefin; and
II) 20-80% of a crystalline random copolymer selected from:

IIa) a copolymer of propylene with 0.8 to 5% by weight of ethylene; provided that the difference in the ethylene content between polymer (I) and polymer (IIa) be at least 0.8 percentage unit with respect to the weight of the (co)polymer concerned;
IIb) a copolymer of propylene with 1.5 to 12% by weight of a $C_4$-$C_{10}$ $\alpha$-olefin and optionally ethylene; provided that the difference in the comonomer content between polymer (I) and polymer (IIb) be at least 1.5 percentage units with respect to the weight of the (co)polymer concerned; and
IIc) a mixture of copolymer (IIa) and copolymer (IIb).

**3.** The fibre of claims 1 and 2 wherein the polymer material has MFR values from 6 to 15 g/ 10 min.

**4.** The fibre of claims 1 to 3 wherein the difference in the ethylene content between polymer (I) and polymer (IIa) is at least 1 percentage unit with respect to the weight of the (co)polymer concerned.

**5.** The fibre of claims 1-4 having a value of bonding force at 150° C of at least 300 cN.

**6.** The fibre of claims 5 and 6 obtainable by a spinning process wherein the composition is subjected to an extrusion temperature of 275° C or less.

**7.** The fibre of claim 5 having a bonding force value of 300 to 800 cN and an MFR value of 50 g/10 min or less and obtainable by a spinning process wherein the composition is subjected to an extrusion temperature of 275 C or less.

**8.** The fibre of claims 6-7 wherein the extrusion temperature ranges from 260° to 275° C.

**9.** A melt spin process for the production of the fibres according to claims 1-4 **characterised in that** it is subjected to the process a propylene polymer composition having an **MFR** value from 4 to 50 g/10 min and being selected from:

i) a crystalline propylene random copolymer or a crystalline propylene polymer composition selected from:

a) a copolymer or polymer composition containing at least 0.8% by weight of ethylene and optionally one or more $C_4$-$C_{10}$ $\alpha$-olefins and having a melting temperature of 155° C or higher, a content of fraction soluble in xylene at room temperature lower than 5% by weight, a value of the ratio of the polymer fraction collected at the temperature range from 25° to 95° C by TREF with xylene to the xylene soluble fraction, higher than 8; and
b) a copolymer or polymer composition containing more than 2.5 wt% by weight of ethylene and optionally one or more $C_4$-$C_{10}$ $\alpha$-olefins and having a melting temperature of 153° C or higher, a content of fraction soluble in xylene at room temperature lower than 10% by weight and a value of the ratio of the polymer fraction collected at the temperature range from 25° to 95° C by TREF with xylene to the xylene soluble fraction at room temperature, higher than 4; and

ii) a crystalline propylene polymer composition having a melting temperature of at least 153° C or higher, a content of fraction soluble in xylene at room temperature lower than 9% by weight; the said composition containing at least 0.64 wt% of ethylene and/or $C_4$-$C_{10}$ α-olefin recurring unit and comprising (percent by weight):

1) 20-80% of a crystalline propylene homopolymer and/or crystalline propylene random copolymer containing up to 1.5% by weight of ethylene and/or C4-Clo α-olefin; and:
II) 20-80%, preferably from 30-70%, of a crystalline random copolymer selected from:

IIa) a copolymer of propylene with 0.8 to 10% by weight of ethylene; provided that the difference in the ethylene content between polymer (I) and polymer (IIa) be at least 0.8 percentage unit with respect to the weight of the (co)polymer concerned;
IIb) a copolymer of propylene with 1.5 to 18% by weight of a $C_4$-$C_{10}$ α-olefin and optionally ethylene; provided that the difference in the comonomer content between polymer (I) and polymer (IIb) be at least 1.5 percentage units with respect to the weight of the (co)polymer concerned; and
IIc) a mixture of copolymer (IIa) and copolymer (IIb).

**10.** The process of claim 9 wherein polymer composition (ii) has a melting temperature of 155° C or higher, a content of fraction soluble in xylene at room temperature lower than 5% by weight, a value of the ratio of the polymer fraction collected at the temperature range from 25° to 95° C by TREF with xylene to the xylene soluble fraction, higher than 8; the said composition containing at least 0.64 wt% of ethylene and/or $C_4$-$C_{10}$ α-olefin recurring unit and comprising (percent by weight):

I) 20-80% of a crystalline propylene homopolymer and/or crystalline propylene random copolymer containing up to 1.5% by weight of ethylene and/or $C_4$-$C_{10}$ α-olefin; and
II) 20-80% of a crystalline random copolymer selected from:

IIa) a copolymer of propylene with 0.8 to 5% by weight of ethylene; provided that the difference in the ethylene content between polymer (I) and polymer (IIa) be at least 0.8 percentage unit with respect to the weight of the (co)polymer concerned;
IIb) a copolymer of propylene with 1.5 to 12% by weight of a $C_4$-$C_{10}$ α-olefin and optionally ethylene; provided that the difference in the comonomer content between polymer (I) and polymer (IIb) be at least 1.5 percentage units with respect to the weight of the (co)polymer concerned; and
IIc) a mixture of copolymer (IIa) and copolymer (IIb).

**11.** The process of claims 9 and 10 wherein the composition is extruded at a temperature of 275° C or lower.

**12.** The process of claim 11 wherein the composition is extruded at a temperature ranging from 260° to 275° C.

**13.** A thermally bonded non-woven fabric comprising the fibres of claims 1-8.

**14.** A composite non-woven fabric comprising two or more layers wherein at least one layer is made of the thermally bonded non-woven fabric of claim 13.

**15.** A process for the production of non-woven fabric of claim 13, wherein the fibres of claims 1 to 8 are subjected to thermalbonding.

**16.** A crystalline propylene polymer composition having an MFR value from 4 to 50 g/10 **min** and an ethylene and/or $C_4$-$C_{10}$ α-olefin content of at least 0.64 wt% and comprising (percent by weight):

I) 20-80% of a crystalline propylene homopolymer or crystalline propylene random copolymer containing up to 1.5% by weight of ethylene and/or C4-Clo a-olefin; and
II) 20-80% of a crystalline random copolymer of propylene with higher than 5 to 9% by weight of ethylene;

the said composition having a melting temperature of 153° C or higher and a content of fraction soluble in xylene at room temperature lower than 9% by weight.

**17.** The composition of claim 16 having MFR values from 6 to 15 g/10 min.

**18.** A process for the polymerisation the crystalline propylene polymer composition of claims 16 and 17 carried out in at least two separate subsequent stages, wherein in at least two polymerisation stages the relevant monomers are polymerised to form polymer (I) and in the other stage(s) the relevant monomers are polymerised to form polymer (II), operating in each stage, except the first step, in the presence of the polymer formed and the catalyst used in the preceding stage.

**Patentansprüche**

**1.** Faser zur thermischen Bindung, die eine Propylenpolymer-Zusammensetzung mit einem MFR-Wert von 4 bis 50 g/10 min umfasst, und ausgewählt ist aus:

i) einer kristallinen statistischen Propylen-Copolymer- oder einer kristallinen Propylenpolymer-Zusammensetzung, ausgewählt aus:

a) einer Copolymer- oder Polymer-Zusammensetzung, die mindestens 0,8 Gew.-% Ethylen und optional ein oder mehr $C_4$-$C_{10}$-$\alpha$-Olefin(e) enthält und Folgendes aufweist: eine Schmelztemperatur von 155 °C oder höher, einen Gehalt an einer in Xylen bei Raumtemperatur löslichen Fraktion von niedriger als 5 Gew.-%, einen Wert des Verhältnisses der im Temperaturbereich von 25 °C bis 95 °C mittels Elutionsfraktionierung mit Temperaturerhöhung (TREF; Temperature Rising Elution Fractionation) mit Xylen gesammelten Polymerfraktion zur in Xylen löslichen Fraktion, von höher als 8; und
b) einer Copolymer- oder Polymer-Zusammensetzung, die mehr als 2,5 Gew.-% Ethylen und optional ein oder mehr $C_4$-$C_{10}$-$\alpha$-Olefin(e) enthält und Folgendes aufweist: eine Schmelztemperatur von 153 °C oder höher, einen Gehalt an einer in Xylen bei Raumtemperatur löslichen Fraktion von niedriger als 10 Gew.-% und einen Wert des Verhältnisses der im Temperaturbereich von 25 °C bis 95 °C mittels TREF mit Xylen gesammelten Polymerfraktion zur in Xylen bei Raumtemperatur löslichen Fraktion, von höher als 4; und

ii) einer kristallinen Propylenpolymer-Zusammensetzung mit einer Schmelztemperatur von 153 °C oder höher, einem Gehalt an einer in Xylen bei Raumtemperatur löslichen Fraktion von niedriger als 10 Gew.-%; wobei die Zusammensetzung, die mindestens 0,64 Gew.-% Ethylen und/oder eine $C_4$-$C_{10}$-$\alpha$-Olefin-Wiederholungseinheit enthält und Folgendes (in Gewichtsprozent) umfasst:

I) 20-80 % eines kristallinen Propylen-Homopolymers und/oder kristallinen statistischen Propylen-Copolymers mit bis zu 1,5 Gew.-% Ethylen und/oder $C_4$-$C_{10}$-$\alpha$-Olefin; und
II) 20-80 % eines kristallinen statistischen Copolymers, ausgewählt aus:

IIa) einem Copolymer von Propylen mit 0,8 bis 10 Gew.-% Ethylen; unter der Voraussetzung, dass der Unterschied des Ethylengehalts zwischen Polymer (I) und Polymer (IIa) mindestens 0,8 Prozenteinheiten bezogen auf das Gewicht des betreffenden (Co)polymers betragen soll; und
IIb) einem Copolymer von Propylen mit 1,5 bis 18 Gew.-% eines $C_4$-$C_{10}$-$\alpha$-Olefins und optional Ethylen; unter der Voraussetzung, dass der Unterschied des Comonomer-Gehalts zwischen Polymer (I) und Polymer (IIb) mindestens 1,5 Prozenteinheiten bezogen auf das Gewicht des betreffenden (Co)polymers betragen soll; und
IIc) einem Gemisch aus Copolymer (IIa) und Copolymer (IIb).

**2.** Faser nach Anspruch 1, worin die Polymer-Zusammensetzung (ii) Folgendes aufweist: eine Schmelztemperatur von 155 °C oder höher, einen Gehalt an einer in Xylen bei Raumtemperatur löslichen Fraktion von niedriger als 5 Gew.-% und einen Wert des Verhältnisses der im Temperaturbereich von 25 °C bis 95 °C mittels TREF mit Xylen gesammelten Polymerfraktion zur in Xylen löslichen Fraktion, von höher als 8; wobei die Zusammensetzung mindestens 0,64 Gew.-% Ethylen und/oder eine $C_4$-$C_{10}$-$\alpha$-Olefin-Wiederholungseinheit enthält und Folgendes (in Gewichtsprozent) umfasst:

I) 20-80 % eines kristallinen Propylen-Homopolymers und/oder kristallinen statistischen Propylen-Copolymers mit bis zu 1,5 Gew.-% Ethylen und/oder $C_4$-$C_{10}$-$\alpha$-Olefin; und
II) 20-80 % eines kristallinen statistischen Copolymers, ausgewählt aus:

IIa) einem Copolymer von Propylen mit 0,8 bis 5 Gew.-% Ethylen; unter der Voraussetzung, dass der Unterschied des Ethylengehalts zwischen Polymer (I) und Polymer (IIa) mindestens 0,8 Prozenteinheiten

bezogen auf das Gewicht des betreffenden (Co)polymers betragen soll;
IIb) einem Copolymer von Propylen mit 1,5 bis 12 Gew.-% eines $C_4$-$C_{10}$-α-Olefins und optional Ethylen; unter der Voraussetzung, dass der Unterschied des Comonomer-Gehalts zwischen Polymer (I) und Polymer (IIb) mindestens 1,5 Prozenteinheiten bezogen auf das Gewicht des betreffenden (Co)polymers betragen soll; und
IIc) einem Gemisch aus Copolymer (IIa) und Copolymer (IIb).

**3.** Faser nach den Ansprüchen 1 und 2, worin das Polymermaterial MFR-Werte von 6 bis 15 g/10 min aufweist.

**4.** Faser nach den Ansprüchen 1 bis 3, worin der Unterschied des Ethylengehalts zwischen Polymer (I) und Polymer (IIa) mindestens 1 Prozenteinheit bezogen auf das Gewicht des betreffenden (Co)polymers beträgt.

**5.** Faser nach den Ansprüchen 1-4 mit einem Wert der Bindungskraft bei 150 °C von mindestens 300 cN.

**6.** Faser nach den Ansprüchen 5 und 6, die durch ein Spinnverfahren erhältlich sind, worin die Zusammensetzung einer Extrusionstemperatur von 275 °C oder niedriger ausgesetzt wird.

**7.** Faser nach Anspruch 5, die einen Bindungskraftwert von 300 bis 800 cN und einen MFR-Wert von 50 g/10 min oder niedriger aufweist und durch ein Spinnverfahren erhältlich ist, worin die Zusammensetzung einer Extrusionstemperatur von 275 °C oder niedriger ausgesetzt wird.

**8.** Faser nach den Ansprüchen 6-7, worin die Extrusionstemperatur im Bereich von 260 °C bis 275 °C liegt.

**9.** Schmelzspinnverfahren zur Herstellung der Fasern nach den Ansprüchen 1-4, **dadurch gekennzeichnet, dass** eine Propylenpolymer-Zusammensetzung mit einem MFR-Wert von 4 bis 50 g/10 min dem Verfahren ausgesetzt wird und ausgewählt ist aus:

i) einer kristallinen statistischen Propylen-Copolymer- oder einer kristallinen Propylenpolymer-Zusammensetzung, ausgewählt aus:

a) einer Copolymer- oder Polymer-Zusammensetzung, die mindestens 0,8 Gew.-% Ethylen und optional ein oder mehr $C_4$-$C_{10}$-α-Olefin(e) enthält und Folgendes aufweist: eine Schmelztemperatur von 155 °C oder höher, einen Gehalt an einer in Xylen bei Raumtemperatur löslichen Fraktion von niedriger als 5 Gew.-%, einen Wert des Verhältnisses der im Temperaturbereich von 25 °C bis 95 °C mittels TREF mit Xylen gesammelten Polymerfraktion zur in Xylen löslichen Fraktion, von höher als 8; und
b) einer Copolymer- oder Polymer-Zusammensetzung, die mehr als 2,5 Gew.-% Ethylen und optional ein oder mehr $C_4$-$C_{10}$-α-Olefin(e) enthält und Folgendes aufweist: eine Schmelztemperatur von 153 °C oder höher, einen Gehalt an einer in Xylen bei Raumtemperatur löslichen Fraktion von niedriger als 10 Gew.-% und einen Wert des Verhältnisses der im Temperaturbereich von 25 °C bis 95 °C mittels TREF mit Xylen gesammelten Polymerfraktion zur in Xylen bei Raumtemperatur löslichen Fraktion, von höher als 4; und

ii) einer kristallinen Propylenpolymer-Zusammensetzung mit einer Schmelztemperatur von mindestens 153 °C oder höher, einem Gehalt an einer in Xylen bei Raumtemperatur löslichen Fraktion von niedriger als 9 Gew.-%; wobei die Zusammensetzung, die mindestens 0,64 Gew.-% Ethylen und/oder eine $C_4$-$C_{10}$-α-Olefin-Wiederholungseinheit enthält und Folgendes (in Gewichtsprozent) umfasst:

I) 20-80 % eines kristallinen Propylen-Homopolymers und/oder kristallinen statistischen Propylen-Copolymers mit bis zu 1,5 Gew.-% Ethylen und/oder $C_4$-$C_{10}$-α-Olefin; und
II) 20-80 %, bevorzugt von 30-70 %, eines kristallinen statistischen Copolymers, ausgewählt aus:

IIa) einem Copolymer von Propylen mit 0,8 bis 10 Gew.-% Ethylen; unter der Voraussetzung, dass der Unterschied des Ethylengehalts zwischen Polymer (I) und Polymer (IIa) mindestens 0,8 Prozenteinheiten bezogen auf das Gewicht des betreffenden (Co)polymers betragen soll;
IIb) einem Copolymer von Propylen mit 1,5 bis 18 Gew.-% eines $C_4$-$C_{10}$-α-Olefins und optional Ethylen; unter der Voraussetzung, dass der Unterschied des Comonomer-Gehalts zwischen Polymer (I) und Polymer (IIb) mindestens 1,5 Prozenteinheiten bezogen auf das Gewicht des betreffenden (Co)polymers betragen soll; und
IIc) einem Gemisch aus Copolymer (IIa) und Copolymer (IIb).

**10.** Faser nach Anspruch 9, worin die Polymer-Zusammensetzung (ii) Folgendes aufweist: eine Schmelztemperatur von 155 °C oder höher, einen Gehalt an einer in Xylen bei Raumtemperatur löslichen Fraktion von niedriger als 5 Gew.-%, einen Wert des Verhältnisses der im Temperaturbereich von 25 °C bis 95 °C mittels TREF mit Xylen gesammelten Polymerfraktion zur in Xylen löslichen Fraktion, von höher als 8; wobei die Zusammensetzung mindestens 0,64 Gew.-% Ethylen und/oder eine $C_4$-$C_{10}$-$\alpha$-Olefin-Wiederholungseinheit enthält und Folgendes (in Gewichtsprozent) umfasst:

I) 20-80 % eines kristallinen Propylen-Homopolymers und/oder kristallinen statistischen Propylen-Copolymers mit bis zu 1,5 Gew.-% Ethylen und/oder $C_4$-$C_{10}$-$\alpha$-Olefin; und
II) 20-80 % eines kristallinen statistischen Copolymers, ausgewählt aus:

IIa) einem Copolymer von Propylen mit 0,8 bis 5 Gew.-% Ethylen; unter der Voraussetzung, dass der Unterschied des Ethylengehalts zwischen Polymer (I) und Polymer (IIa) mindestens 0,8 Prozenteinheiten bezogen auf das Gewicht des betreffenden (Co)polymers betragen soll;
IIb) einem Copolymer von Propylen mit 1,5 bis 12 Gew.-% eines $C_4$-$C_{10}$-$\alpha$-Olefins und optional Ethylen; unter der Voraussetzung, dass der Unterschied des Comonomer-Gehalts zwischen Polymer (I) und Polymer (IIb) mindestens 1,5 Prozenteinheiten bezogen auf das Gewicht des betreffenden (Co)polymers betragen soll; und
IIc) einem Gemisch aus Copolymer (IIa) und Copolymer (IIb).

**11.** Verfahren nach den Ansprüchen 9 und 10, worin die Zusammensetzung bei einer Temperatur von 275 °C oder niedriger extrudiert wird.

**12.** Verfahren nach Anspruch 11, worin die Zusammensetzung bei einer Temperatur im Bereich von 260 °C bis 275 °C extrudiert wird.

**13.** Thermisch gebundener Vliesstoff, umfassend die Fasern nach den Ansprüchen 1-8.

**14.** Verbundvliesstoff, umfassend zwei oder mehr Schichten, worin mindestens eine Schicht aus thermisch gebundenem Vliesstoff nach Anspruch 13 hergestellt ist.

**15.** Verfahren zur Herstellung von Vliesstoff nach Anspruch 13, worin die Fasern nach den Ansprüchen 1 bis 8 der Wärmebindung ausgesetzt werden.

**16.** Kristalline Propylenpolymer-Zusammensetzung, die einen MFR-Wert von 4 bis 50 g/10 min und einen Ethylen- und/oder $C_4$-$C_{10}$-$\alpha$-Olefin-Gehalt von mindestens 0,64 Gew-% aufweist und Folgendes (in Gewichtsprozent) umfasst:

I) 20-80 % eines kristallinen Propylen-Homopolymers oder kristallinen statistischen Propylen-Copolymers mit bis zu 1,5 Gew.-% Ethylen und/oder $C_4$-$C_{10}$-$\alpha$-Olefin; und
II) 20-80% eines kristallinen statistischen Copolymers von Propylen mit höher als 5 bis 9 Gew.-% Ethylen;

wobei die Zusammensetzung eine Schmelztemperatur von 153 °C oder höher und einen Gehalt einer in Xylen bei Raumtemperatur löslichen Fraktion von niedriger als 9 Gew.-% aufweist.

**17.** Zusammensetzung nach Anspruch 16 mit MFR-Werten von 6 bis 15 g/10 min.

**18.** Verfahren zur Polymerisation der kristallinen Propylenpolymer-Zusammensetzung nach den Ansprüchen 16 und 17, das in mindestens zwei getrennten aufeinanderfolgenden Stufen durchgeführt wird, worin auf mindestens zwei Polymerisationsstufen die relevanten Monomere zur Bildung von Polymer (I) polymerisiert werden und auf der/den anderen Stufe(n) die relevanten Monomere zur Bildung von Polymer (II) polymerisiert werden, das auf jeder Stufe, außer dem ersten Schritt, in Gegenwart des gebildeten Polymers und des auf der vorangehenden Stufe verwendeten Katalysators betrieben wird.

## Revendications

**1.** Fibre pour la liaison thermique, comprenant une composition polymère de propylène présentant une valeur MFR de 4 à 50 g/10 min et étant choisie parmi :

i) une composition d'un copolymère cristallin aléatoire de propylène ou d'un polymère cristallin de propylène, choisie parmi :

a) une composition d'un copolymère ou d'un polymère contenant au moins 0,8% en poids d'éthylène et éventuellement une ou plusieurs $\alpha$-oléfines en $C_4$-$C_{10}$ et présentant une température de fusion de 155°C ou plus, une teneur en fraction soluble dans du xylène à température ambiante inférieure à 5% en poids, une valeur du rapport de la fraction polymère récupérée dans la plage de température de 25°C à 95°C par un fractionnement par élution en augmentant la température (TREF) avec du xylène à la fraction soluble dans du xylène supérieure à 8 ; et
b) une composition d'un copolymère ou d'un polymère contenant plus de 2,5% en poids d'éthylène et éventuellement une ou plusieurs $\alpha$-oléfines en $C_4$-$C_{10}$ et présentant une température de fusion de 153°C ou plus, une teneur en fraction soluble dans du xylène à température ambiante inférieure à 10% en poids et une valeur du rapport de la fraction polymère récupérée dans la plage de température de 25°C à 95°C par TREF avec du xylène à la fraction soluble dans du xylène à température ambiante supérieure à 4 ; et

ii) une composition d'un polymère cristallin de propylène présentant une température de fusion de 153°C ou plus, une teneur en fraction soluble dans du xylène à température ambiante inférieure à 10% en poids ; ladite composition contenant au moins 0,64% en poids d'unité récurrente d'éthylène et/ou d'$\alpha$-oléfme en $C_4$-$C_{10}$ et comprenant (pourcentage en poids) :

I) 20-80% d'un homopolymère cristallin de propylène et/ou d'un copolymère cristallin aléatoire de propylène contenant jusqu'à 1,5% en poids d'éthylène et/ou d'$\alpha$-oléfine en $C_4$-$C_{10}$ ; et
II) 20-80% d'un copolymère cristallin aléatoire choisi parmi :

IIa) un copolymère de propylène avec 0,8 à 10% en poids d'éthylène ; à condition que la différence en teneur en éthylène entre le polymère

(I) et le polymère (IIa) soit d'au moins 0,8 unité de pourcentage par rapport au poids du (co)polymère en question ; et

IIb) un copolymère de propylène avec 1,5 à 18% en poids d'une $\alpha$-oléfine en $C_4$-$C_{10}$ et éventuellement d''éthylène ; à condition que la différence en teneur en comonomère entre le polymère (I) et le polymère (IIb) soit d'au moins 1,5 unité de pourcentage par rapport au poids du (co)polymère en question ; et
IIc) un mélange de copolymère (IIa) et de copolymère (IIb).

**2.** Fibre selon la revendication 1, où la composition polymère (ii) présente une température de fusion de 155°C ou plus, une teneur en fraction soluble dans du xylène à température ambiante inférieure à 5% en poids et une valeur du rapport de la fraction polymère récupérée dans la plage de température de 25°C à 95°C par TREF avec du xylène à la fraction soluble dans du xylène supérieure à 8 ; ladite composition contenant au moins 0,64% en poids d'unité récurrente d'éthylène et/ou d'$\alpha$-oléfine en $C_4$-$C_{10}$ et comprenant (pourcentage en poids) :

I) 20-80% d'un homopolymère cristallin de propylène et/ou d'un copolymère cristallin aléatoire de propylène contenant jusqu'à 1,5% en poids d'éthylène et/ou d'$\alpha$-oléfine en $C_4$-$C_{10}$ ; et
II) 20-80% d'un copolymère cristallin aléatoire choisi parmi :

IIa) un copolymère de propylène avec 0,8 à 5% en poids d'éthylène ; à condition que la différence en teneur en éthylène entre le polymère (I) et le polymère (IIa) soit d'au moins 0,8 unité de pourcentage par rapport au poids du (co)polymère en question ;
IIb) un copolymère de propylène avec 1,5 à 12% en poids d'une $\alpha$-oléfine en $C_4$-$C_{10}$ et éventuellement d'éthylène ; à condition que la différence en teneur en comonomère entre le polymère (I) et le polymère (IIb) soit d'au moins 1,5 unité de pourcentage par rapport au poids du (co)polymère en question ; et
IIc) un mélange de copolymère (IIa) et de copolymère (IIb).

**3.** Fibre selon les revendications 1 et 2, où le matériau polymère présente des valeurs MFR de 6 à 15 g/10 min.

**4.** Fibre selon les revendications 1 à 3, où la différence en teneur en éthylène entre le polymère (I) et le polymère (IIa) est d'au moins 1 unité de pourcentage par rapport au poids du (co)polymère en question.

**5.** Fibre selon les revendications 1-4 présentant une valeur de la force de liaison à 150° C d'au moins 300 cN.

**6.** Fibre selon les revendications 5 et 6 pouvant être obtenue par un procédé de filage dans lequel la composition est soumise à une température d'extrusion de 275° C ou moins.

**7.** Fibre selon la revendication 5, présentant une valeur de la force de liaison de 300 à 800 cN et une valeur MFR de 50 g/10 min ou moins et pouvant être obtenue par un procédé de filage dans lequel la composition est soumise à une température d'extrusion de 275° C ou moins.

**8.** Fibre selon les revendications 6-7, où la température d'extrusion s'étend de 260° à 275° C.

**9.** Procédé de filage en masse fondue pour la production des fibres selon les revendications 1 à 4, **caractérisé en ce qu'**on fait procéder une composition d'un polymère de propylène présentant une valeur MFR de 4 à 50 g/10 min et étant choisie parmi :

i) une composition d'un copolymère cristallin aléatoire de propylène ou d'un polymère cristallin de propylène, choisie parmi :

a) une composition d'un copolymère ou d'un polymère contenant au moins 0,8% en poids d'éthylène et éventuellement une ou plusieurs $\alpha$-oléfines en $C_4$-$C_{10}$ et présentant une température de fusion de 155°C ou plus, une teneur en fraction soluble dans du xylène à température ambiante inférieure à 5% en poids, une valeur du rapport de la fraction polymère récupérée dans la plage de température de 25°C à 95°C par TREF avec du xylène à la fraction soluble dans du xylène supérieure à 8 ; et
b) une composition d'un copolymère ou d'un polymère contenant plus de 2,5% en poids d'éthylène et éventuellement une ou plusieurs $\alpha$-oléfines en $C_4$-$C_{10}$ et présentant une température de fusion de 153°C ou plus, une teneur en fraction soluble dans du xylène à température ambiante inférieure à 10% en poids et une valeur du rapport de la fraction polymère récupérée dans la plage de température de 25°C à 95°C par TREF avec du xylène à la fraction soluble dans du xylène à température ambiante supérieure à 4 ; et

ii) une composition d'un polymère cristallin de propylène présentant une température de fusion d'au moins 153°C ou plus, une teneur en fraction soluble dans du xylène à température ambiante inférieure à 9% en poids ; ladite composition contenant au moins 0,64% en poids d'unité récurrente d'éthylène et/ou d'$\alpha$-oléfme en $C_4$-$C_{10}$ et comprenant (pourcentage en poids) :

I) 20-80% d'un homopolymère cristallin de propylène et/ou d'un copolymère cristallin aléatoire de propylène contenant jusqu'à 1,5% en poids d'éthylène et/ou d'$\alpha$-oléfine en $C_4$-$C_{10}$ , et
II) 20-80%, de préférence 30-70%, d'un copolymère cristallin aléatoire choisi parmi :

IIa) un copolymère de propylène avec 0,8 à 10% en poids d'éthylène ; à condition que la différence en teneur en éthylène entre le polymère (I) et le polymère (IIa) soit d'au moins 0,8 unité de pourcentage par rapport au poids du (co)polymère en question ;

IIb) un copolymère de propylène avec 1,5 à 18% en poids d'une $\alpha$-oléfine en $C_4$-$C_{10}$ et éventuellement d''éthylène ; à condition que la différence en teneur en comonomère entre le polymère (I) et le polymère (IIb) soit d'au moins 1,5 unité de pourcentage par rapport au poids du (co)polymère en question ; et
IIc) un mélange de copolymère (IIa) et de copolymère (IIb).

**10.** Procédé selon la revendication 9, où la composition polymère (ii) présente une température de fusion de 155°C ou plus, une teneur en fraction soluble dans du xylène à température ambiante inférieure à 5% en poids, une valeur du rapport de la fraction polymère récupérée dans la plage de température de 25°C à 95°C par TREF avec du xylène à la fraction soluble dans du xylène supérieure à 8 ; ladite composition contenant au moins 0,64% en poids d'unité récurrente d'éthylène et/ou d'$\alpha$-oléfine en $C_4$-$C_{10}$ et comprenant (pourcentage en poids) :

I) 20-80% d'un homopolymère cristallin de propylène et/ou d'un copolymère cristallin aléatoire de propylène contenant jusqu'à 1,5% en poids d'éthylène et/ou d'$\alpha$-oléfine en $C_4$-$C_{10}$ ; et
II) 20-80% d'un copolymère cristallin aléatoire choisi parmi :

IIa) un copolymère de propylène avec 0,8 à 5% en poids d'éthylène ; à condition que la différence en teneur

en éthylène entre le polymère (I) et le polymère (IIa) soit d'au moins 0,8 unité de pourcentage par rapport au poids du (co)polymère en question ;

IIb) un copolymère de propylène avec 1,5 à 12% en poids d'une $\alpha$-oléfine en $C_4$-$C_{10}$ et éventuellement d'éthylène ; à condition que la différence en teneur en comonomère entre le polymère (I) et le polymère (IIb) soit d'au moins 1,5 unité de pourcentage par rapport au poids du (co)polymère en question ; et

IIc) un mélange de copolymère (IIa) et de copolymère (IIb).

**11.** Procédé selon les revendications 9 et 10, où la composition est extrudée à une température de 275°C ou moins.

**12.** Procédé selon la revendication 11, où la composition est extrudée à une température allant de 260°C à 275°C.

**13.** Tissu non tissé lié thermiquement comprenant les fibres selon les revendications 1-8.

**14.** Tissu composite non tissé comprenant deux couches ou plus, dont au moins une couche est réalisée en tissu non tissé lié thermiquement selon la revendication 13.

**15.** Procédé pour la production d'un tissu non tissé selon la revendication 13, où les fibres selon les revendications 1 à 8 sont soumises à une liaison thermique.

**16.** Composition d'un polymère cristallin de propylène présentant une valeur MFR de 4 à 50 g/10 min et une teneur en éthylène et/ou en $\alpha$-oléfine en $C_4$-$C_{10}$ d'au moins 0,64% en poids et comprenant (pourcentage en poids) :

I) 20-80% d'un homopolymère cristallin de propylène ou d'un copolymère cristallin aléatoire de propylène contenant jusqu'à 1,5% en poids d'éthylène et/ou d'$\alpha$-oléfine en $C_4$-$C_{10}$ ; et

II) 20-80% d'un copolymère aléatoire cristallin de propylène présentant plus de 5 à 9% en poids d'éthylène ;

ladite composition présentant une température de fusion de 153° C ou plus et une teneur en fraction soluble dans du xylène à température ambiante inférieure à 9% en poids.

**17.** Composition selon la revendication 16 présentant des valeurs de MFR de 6 à 15 g/10 min.

**18.** Procédé pour la polymérisation de la composition de polymère cristallin de propylène selon les revendications 16 et 17 effectué en au moins deux étapes séparées consécutives, ou, dans au moins deux étapes de polymérisation, les monomères adéquats sont polymérisés pour former le polymère (I) et dans l'/les autre(s) étape(s), les monomères adéquats sont polymérisés pour former le polymère (II), en opérant dans chaque étape, sauf dans la première, en présence du polymère formé et du catalyseur utilisé dans l'étape précédente.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*


### Patent documents cited in the description

- US 4211819 A
- WO 0002929 A
- US 4399054 A
- EP 45977 A
- US 4472524 A
- EP 361493 A
- EP 728769 A
- EP 391438 A
- EP 3013881 A

### Non-patent literature cited in the description

- **Friedelm Hauser.** Plastics Extrusion Technology. Hauser Publishers, 1988
- **M. Ahmed.** Polypropylene fibres science and technology. Elsevier Scientific Publishing Company, 1982, 344-346